# EUROPÄISCHE PATENTSCHRIFT

(11) **EP 0 560 043 B1**
(45) Veröffentlichungstag und Bekanntmachung des Hinweises auf die Patenterteilung: **18.06.1997**
(21) Anmeldenummer: 93101596.0
(22) Anmeldetag: 03.02.1993
(51) Int. Cl.: G02B 6/12, G02B 6/28, G02B 6/30, B29D 11/00, B29C 67/00

(54) **Verfahren zum Herstellen von Bauelementen für Lichtwellenleiternetze und nach diesem Verfahren hergestellte Bauelemente**
Manufacturing method of devices for lightguide networks and elements produced using this method
Méthode de fabrication d'éléments pour des réseaux de guide d'ondes et éléments fabriqués utilisant cette méthode

(30) Priorität: 07.03.1992 DE 4207207; 27.05.1992 DE 4217526
(43) Veröffentlichungstag der Anmeldung: 15.09.1993
(73) Patentinhaber: MINNESOTA MINING AND MANUFACTURING COMPANY, St. Paul, Minnesota 55133-3427 (US)
(72) Erfinder: Rogner, Arnd, Dr., W-7500 Karlsruhe 41 (DE); Neyer, Andreas, Dr., W-5860 Iserlohn (DE)
(74) Vertreter: VOSSIUS & PARTNER

(56) Entgegenhaltungen:
- EP-A- 0 315 874
- EP-A- 0 451 549

## Beschreibung

Die Erfindung betrifft ein Verfahren zum Herstellen passiver integriertoptischer Bauelemente aus polymeren Werkstoffen für Wellenleiternetze im optischen Bereich mit Glasfasern oder Polymerfasern als Übertragungsmedium sowie nach diesem Verfahren hergestellte Bauelemente und Formteile. Unter Formteil wird ein Kunststoffkörper verstanden, der nach einem Abformverfahren aus einem polymeren Material hergestellt wird. Dieses Formteil ergibt zusammen mit anzukoppelnden Lichtwellenleiter-Stücken und ggf. einer Deckplatte das funktionsfähige Bauelement für Lichtwellenleiternetze (LWL-Netze).

Die Erfindung bezweckt, derartige Bauelemente wirtschaftlicher herzustellen, ohne deren Gebrauchsverhalten zu beeinträchtigen.

In der Nachrichtentechnik gewinnen LWL-Netzwerke ständig an Bedeutung. Für die Nachrichtenübertragung im Lang- und Mittelstreckenbereich werden als Übertragungsmedium überwiegend Einmoden-Fasern aus Quarz benutzt, im Kurzstreckenbereich und in Sensornetzen überwiegend Mehrmoden-Fasern aus Quarz oder einem Polymeren.

LWL-Netze bestehen aus LWL-Fasern, aktiven Komponenten (Sender und Empfänger), steuerbaren Komponenten (z. B. Schalter und Modulatoren) und passiven Komponenten (z. B. Verzweiger, Koppler, Interferometerstrukturen, Wellenlängen-Multiplexer und -Demultiplexer). Die Herstellung dieser Komponenten verursacht bisher relativ hohe Kosten.

Es ist bekannt, passive Komponenten aus miniaturisierten Komponenten der geometrischen Optik, wie Linsen, Prismen und Spiegeln herzustellen (D. Lutzke: Lichtwellenleitertechnik, Pflaum-Verlag, München, 1986). Dieser Miniaturisierung sind praktisch Grenzen gesetzt.

In EP-0 366 110 wird die Herstellung von Kopplern aus Glas-LWL-Fasern beschrieben. Dazu werden die LWL-Fasern von der Schutzumhüllung befreit, nebeneinander gelegt, gegebenfalls verdrillt und unter Zugspannung bei einer bestimmten Temperatur miteinander verschmolzen. Bei Verwendung entsprechender Fasern können sowohl Mehrmoden- als auch Einmoden-Faserkoppler hergestellt werden. Für einen 1 x N-Koppler mit N > 2 werden mehrere 1 x 2-Koppler hintereinander geschaltet, was platz- und kostenintensiv ist.

Aus EP-0 315 874 sind optische Koppler für Polymer-LWL-Fasern bekannt, bei denen zwei bis 1 000 Polymer-LWL-Fasern gleichsinnig angeordnet und gebündelt werden; die LWL-Fasern werden über eine gewisse Länge gegebenenfalls verdrillt. Über die Knotenstelle wird ein Stück Kunststoff-Schrumpfschlauch geschoben. Nach Erhitzen des Schrumpfschlauches werden die Fasern dicht gebündelt oder zusammengeschmolzen. Die Knotenstelle kann verstreckt werden.

In EP-0 290 329 wird die Herstellung integriert-optischer Einmoden-Wellenleiter-Strukturen beschrieben. Das Prinzip der Wellenführung auf dem Substrat durch Streifenwellenleitung und der lithographische Herstellungsprozeß erlauben die Integration und gleichzeitige Herstellung verschiedener optischer Funktionen auf einem Substrat. Bei derartig hergestellten integriert-optischen Wellenleitern ist das Ankoppeln von LWL-Fasern relativ aufwendig und kostenintensiv.

In EP-0 451 549 werden optische Koppler aus Polymeren für Mehrmoden-Polymer-LWL-Netzwerke beschrieben, die im Spritzgußverfahren hergestellt werden. Das Kopplerelement ist massiv und kann mit einem Polymeren beschichtet sein, welches einen niedrigeren Brechungsindex als der Koppler hat. Dabei wird eine Polymer-Schmelze in eine Spritzgußform, die aus zwei oder mehr Teilen besteht, eingespritzt. Nach dem Erstarren wird das fertige Kopplerelement, bestehend aus dem Mischbereich mit den Enden der LWL-Fasern, aus der Form entnommen. Bei einer weiteren Methode werden Kanäle mittels Spritzgießen in die Oberfläche einer Kunststoffplatte eingebracht, in die die LWL-Fasern eingelegt werden. Der Freiraum zwischen den LWL-Enden wird mit Gießharz ausgefüllt. Die Spritzgußform wird durch Fräsen oder Funkenerodieren und anschließendes Polieren hergestellt. Die Kanäle für die LWL-Fasern haben einen quadratischen oder runden Querschnitt und einen Durchmesser oder eine Kantenlänge von 0,1 bis 3 mm.

Aus EP-0 324 492 ist ein Koppler für LWL-Fasern bekannt, der aus einer gestuften Grundplatte besteht, die an zwei Seiten mehrere Gräben zum Einführen der Wellenleiterenden trägt. Im mittleren Teil der Platte werden durch ein gegebenenfalls mehrstufiges photolithographisches Verfahren die Koppelstrukturen erzeugt.

In EP-0 420 173 wird ein Verfahren zur Herstellung von Rippenwellenleiterstrukturen aus Polymeren durch Befüllen einer metallischen Form mit einem flüssigen Material beschrieben, das unter Einwirkung von energiereicher Strahlung gehärtet wird. Der hierzu notwendige Zeitaufwand ist typischerweise größer als z.B. bei Spritzgußverfahren. Auf ein Substrat wird eine Kernschicht mit einer Rippenstruktur aufgebracht. Eine Deckschicht schützt die Kernschicht und die Rippenstruktur vor mechanischer Beschädigung. Zwischen Substrat und Kernschicht kann eine Trennschicht liegen. Kernschicht und Rippenstruktur haben denselben Brechungsindex, der größer ist als der Brechungsindex von Deckschicht und Trennschicht. Die Dicke der Kernschicht und die Breite der Rippen sind deutlich größer als der Kerndurchmesser der anzukoppelnden LWL-Fasern. Zum Ankoppeln der LWL-Fasern an die Rippenstruktur werden keine Hinweise gegeben.

Die bekannten Verfahren zeichnen sich aus durch eine relativ aufwendige Technik, mit der die Lichtwellenleitungsstrukturen und die Faserführungsstrukturen für die LWL-Fasern in das Substrat eingebracht werden. Einige der bekannten Verfahren erlauben nur die Einzelstück-Fertigung oder sind auf Spezialmaschinen angewiesen. Einige Koppler haben relativ hohe Übertragungsverluste und/oder sind mechanisch wenig stabil. Für die Ankopplung der LWL-Fasern an einen integriert-optischen Schaltkreis wurde bisher keine befriedigend kostengünstige und gleichzeitig langzeitstabile Lösung gefunden. Es ist bisher schwierig, die für die Führung der LWL-Fasern notwendigen tiefen und breiten Faserführungsstrukturen in präziser Position zu den relativ kleinen Lichtwellenleitungsstrukturen zu erzeugen. Durch die Anwendung kostengünstiger Abformprozesse können bisher nur Bauteile für Mehrmoden-Polymer-LWL-Netzwerke hergestellt werden. Ein für Mehrmoden-Glas-LWL-Fasern oder Einmoden-Glas-LWL-Fasern geeigneter Übergang zwischen Faserführungsstruktur und Lichtwellenleitungsstruktur zum Ausgleichen der unterschiedlichen Durchmesser von Faserkern und Fasermantel ist bisher nicht bekannt. Damit entsteht die Aufgabe, an passives integriertes optisches Bauelement, das stabil und kostengünstig ist, und ein Verfahren zu finden, mit dem passive integriert-optische Bauelemente - einschließlich der Verbindungsstellen zu LWL-Fasern - aus polymeren Werkstoffen mit Abmessungen im Mikrometerbereich einfach und kostengünstig hergestellt werden können.

Die Aufgabe wird erfindungsgemäß gelöst durch ein Verfahren, dessen Merkmale in den Ansprüchen 1 bis 8 angegeben sind. Die Merkmale der erzeugten passiven integriert-optischen Bauelemente sind ihn den Ansprüchen 9 bis 16 angegeben und die Merkmale eines erfindungsgemäßen passiven integrierten optischen Bauelements in den Ansprüchen 17 und 18.

Nach dem erfindungsgemäßen Verfahren werden passive integriert-optische Bauelemente aus polymeren Werkstoffen hergestellt, wobei man von einem Formteil mit Vorformen für die Lichtwellenleitungsstrukturen und Faserführungsstrukturen ausgeht. Die Lichtwellenleitung der Vorformen für die Lichtwellenleitungsstrukturen wird durch deren Nachbehandlung erreicht. An das Formteil wird mindestens eine LWL-Faser angekoppelt, deren Ende in einer grabenförmigen Faserführungsstruktur liegt. Das polymere Formteil wird mit einer Stufe an jedem Übergang zwischen einer Faserführungsstruktur und der Vorform für die Lichtwellenleitungsstruktur versehen, wobei beide Strukturen gleichzeitig hergestellt werden. Die LWL-Fasern können vor, während oder nach der Nachbehandlung der Vorformen für die Lichtwellenleitungsstrukturen mit dem Formteil zusammengefügt werden.

Zur Herstellung des integriert-optischen Bauelementes wird zunächst ein polymeres Formteil abgeformt, das sowohl Vorformen für Lichtwellenleitungsstrukturen als auch Faserführungsstrukturen für die anzukoppelnden LWL-Fasern enthält, wobei Lichtwellenleitungsstruktur und Faserführungsstruktur in der Regel unterschiedliche Querschnitte haben und deshalb eine gestufte Struktur erforderlich ist.

Ein bevorzugtes Verfahren zum Herstellen eines gestuften Mikrostrukturkörpers durch Röntgen-Tiefenlithographie, das Herstellen eines gestuften metallischen Formeinsatzes durch Galvanoformung und das Abformen eines mikrostrukturierten Formteils aus Kunststoff sind z. B. in DE-41 42 001 beschrieben.

Mittels der Röntgen-Tiefenlithographie wird zunächst ein gestufter Mikrostrukturkörper hergestellt, dessen Struktur mit der Struktur des zu erzeugenden polymeren Formteils als Ausgangsstruktur für das spätere passive integriert-optische Bauelement - im folgenden abgekürzt als Formteil bezeichnet - übereinstimmt.

Der so erhaltene gestufte Mikrostrukturkörper wird durch Galvanoformung in einen metallischen Formeinsatz umkopiert. Die Struktur des Formeinsatzes ist komplementär zur Struktur des vorher erzeugten gestuften Mikrostrukturkörpers sowie zur Struktur des daraus durch Abformen hergestellten Formteils.

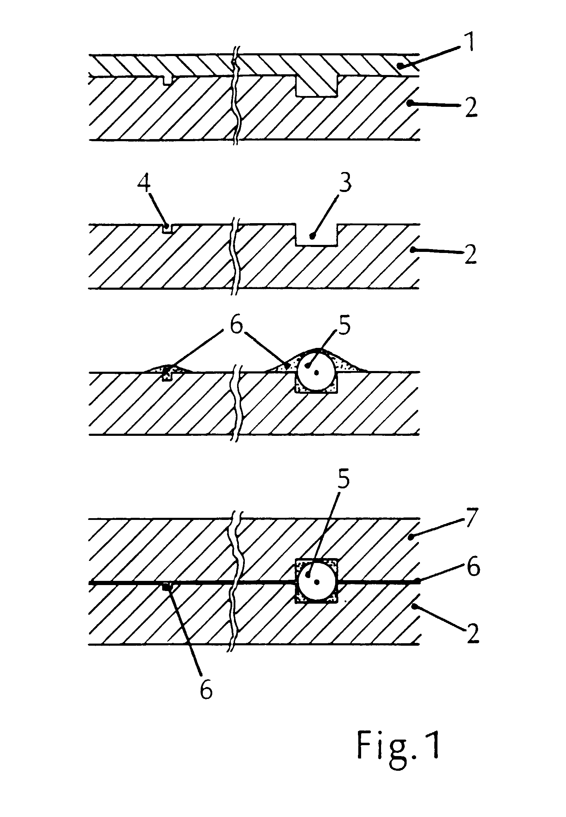

Figur 1 zeigt das prinzipielle Herstellungsverfahren eines Bauelementes mit Gräben als Vorformen für die Lichtwellenleitungsstrukturen. Das mit Hilfe des metallischen Formeinsatzes (1) abgeformte Formteil (2) enthält Faserführungsstrukturen (3) für die Führung der anzukoppelnden LWL-Fasern, Vorformen (4) für die Lichtwellenleitungsstrukturen, die als Stege oder Gräben ausgebildet sind, sowie gegebenenfalls weitere mikrooptische Elemente, deren Vorformen bereits im zuerst hergestellten gestuften Mikrostrukturkörper durch Röntgen-Tiefenlithographie erzeugt werden. Derartige mikrooptische Elemente sind z.B. Prismen, Zylinderlinsen, Zylinderspiegel und Strichgitter mit unterschiedlichen Formen der Gitterstriche.

Die Stege oder Gräben als Vorformen für die Lichtwellenleitungsstrukturen haben einen rechteckigen Querschnitt, dessen Kantenlänge von 1 bis 1000 µm beträgt.

Die anzukoppelnden LWL-Fasern bestehen aus Quarzglas oder aus Kunststoff und haben einen Faserkern und einen Fasermantel, wobei der Brechungsindex des Kernmaterials größer ist als der des Mantelmaterials. Der Durchmesser des Faserkerns beträgt 1 bis 980 µm, der Außendurchmesser des Mantels beträgt 30 bis 1000 µm. Die Gräben als Faserführungsstrukturen für die LWL-Fasern innerhalb des Formteils haben einen rechteckigen Querschnitt, dessen Kantenlängen an den Durchmesser der LWL-Fasern angepaßt sind. Die Faserführungsstrukturen sind in mindestens einer der beiden Richtungen senkrecht zu ihrer Achse stufenförmig abgesetzt gegen die Vorformen für die Lichtwellenleitungsstrukturen. Damit liegt der lichtleitende Kern der LWL-Fasern exakt vor der Stirnfläche der Vorformen für die Lichtwellenleitungsstrukturen im Formteil. Gleichzeitig ist in achsialer Richtung ein Anschlag für die exakte Positionierung der LWL-Fasern gegeben.

Das Formteil hat mindestens einen Graben als Faserführungsstruktur zum Ankoppeln von mindestens einer LWL-Faser. Im allgemeinen hat das Formteil viele solcher Gräben, die das Ende jeweils einer LWL-Faser aufnehmen. Zwischen den Enden der LWL-Fasern liegen die Lichtwellenleitungsstrukturen innerhalb des Formteils. Diese Lichtwellenleitungsstrukturen können in Richtung der Lichtwellenleitung vielfältige Formen haben, wodurch eine Vielzahl unterschiedlicher Bauelemente entsteht, z. B. T-, Y-, X-, M-, N-Koppler, m x n-Koppler, wobei m und n gleiche oder verschiedene Zahlen von 1 bis zu relativ großen Werten sein können, sowie Richtkoppler-Strukturen, Wellenlängenmultiplexer und -demultiplexer. Derartige Lichtwellenleitungsstrukturen können in einem Bauelement mehrfach, nebeneinander und/oder gemischt vorliegen, z.B. als mehrere hintereinander geschaltete 1 x 2-Koppler. Die Lichtwellenleitungsstrukturen können symmetrisch sein, wenn eine einlaufende Lichtwelle gleichmäßig aufgeteilt werden soll, oder unsymmetrisch, wenn das Teilungsverhältnis von 1 abweichen soll. Die Lichtwellenleitungsstrukturen können zum Erzielen einer optimalen, möglichst dämpfungsarmen Lichtwellenleitung gerade oder beliebig gekrümmt sein.

Zum Abformen des Formteils mittels des metallischen Formeinsatzes werden für die jeweils benutzte Lichtwellenlänge transparente Polymere verwendet. Dieses sind z. B. Polymethyl-methacrylat, Polycarbonat, Polyurethan, Polystyrol, Polyolefin. Als Abformverfahren können z. B. Spritzgießen, Spritzprägen, Reaktionsgießen, Vakuumgießen, Prägen, Vakuumprägen, Pressen oder Spritzpressen verwendet werden.

Die Formteile werden wie folgt weiterbearbeitet (siehe Figur 1). Bei Formteilen mit Gräben (4) als Vorformen für die Lichtwellenleitungsstrukturen werden die Enden der anzukoppelnden LWL-Fasern (5) in die Gräben (3) als Faserführungsstrukturen des Formteils (2) eingelegt. Die Gräben (4) als Vorformen für die Lichtwellenleitungsstrukturen und die Gräben (3) als Faserführungsstrukturen werden zum Erreichen der Lichtwellenleitung nachbehandelt durch Vergießen mit einem Polymeren (6), dessen Brechungsindex größer ist als der Brechungsindex des Polymeren, aus dem das Formteil (2) besteht, so daß die numerische Apertur der Lichtwellenleitungsstrukturen an die numerische Apertur der LWL-Fasern angepaßt ist, bzw. bei Einmoden-LWL-Fasern die Modenfelder von LWL-Fasern und der Lichtwellenleitungsstruktur möglichst günstig angepaßt sind. Auf das Formteil (2) wird eine Deckplatte (7) aufgelegt, die durch das aushärtende eingegossene Polymere (6) mit dem Formteil (2) verklebt wird. Die angekoppelten LWL-Fasern (5) sind mit dem Formteil fest und dauerhaft verbunden. Als Materialien für die Herstellung der Lichtwellenleitungsstrukturen sind flüssige transparente Präpolymere geeignet, die anschließend mit Licht, durch Wärmeeinwirkung oder durch chemische Initiierung ausgehärtet werden, z.B. Epoxid-Harze oder Präpolymere auf Acrylat-Basis.

Bei Formteilen mit Stegen als Vorformen für die Lichtwellenleitungsstrukturen für Einmoden-LWL-Fasern werden die Stege durch Implantation von Ionen einer bestimmten Energie und Dosis nachbehandelt, wobei der Brechungsindex der Stege erhöht wird. Dadurch wird der räumliche Bereich, in dem die Lichtwellen geleitet werden, gegen den übrigen Teil des abgeformten Formteils abgegrenzt. Die anzukoppelnden LWL-Fasern können in den grabenförmigen Faserführungsstrukturen mit dem Formteil verklebt werden. In diesem Fall kann gegebenenfalls auf eine Deckplatte verzichtet werden.

Bei Formteilen mit nachbehandelten Stegen als Lichtwellenleitungsstrukturen für Mehrmoden-LWL-Fasern werden die Stege in ein Material eingebettet, dessen Brechungsindex kleiner ist als der Brechungsindex des Polymeren, aus dem das Formteil besteht, so daß die numerische Apertur der Lichtwellenleitungsstruktur an die numerische Apertur der LWL-Fasern angepaßt ist. In diesem Fall kann gegebenenfalls auf eine Deckplatte verzichtet werden.

Die Gräben als Faserführungsstrukturen für die LWL-Fasern können mit einem Teil ihres Querschnittes auch in der Deckplatte angebracht sein.

Das erfindungsgemäße Verfahren und die damit hergestellten Bauelemente haben folgende Vorteile:
- Die Realisierung von Formteilen mit einem in einer der beiden Richtungen oder in beiden Richtungen senkrecht zur Achse der Vorformen für die Lichtwellenleitungsstrukturen gestuften Übergang zwischen Faserführungsstruktur für die LWL-Fasern und Lichtwellenleitungsstruktur ist Voraussetzung für die Herstellung von Einmoden-Bauelementen und minimiert bei Mehrmoden-Bauelementen die durch den unterschiedlichen Durchmesser von Kern und Mantel der LWL-Fasern bedingten Lichtverluste am Übergang von Lichtwellenleitungsstruktur und LWL-Faser.
- Die für die Lichtwellenleitung benötigten relativ kleinen Vorformen für die Lichtwellenleitungsstrukturen im Bereich einiger Mikrometer und die für die Führung der LWL-Fasern benötigten relativ großen Faserführungsstrukturen im Bereich von einigen hundert Mikrometern werden in allen Stufen des Verfahrens gleichzeitig und auf dieselbe Weise erzeugt.
- Der tiefenlithographisch hergestellte gestufte Mikrostrukturkörper und damit der metallische Formeinsatz sowie das abgeformte Formteil sind überaus maßhaltig.
- Wegen des gestuften Überganges ist die Tauchtiefe der LWL-Fasern präzise vorgebbar; dadurch wird die Symmetrie oder gezielte Asymmetrie der Bauelemente verbessert.
- Das Verfahren zum Herstellen des gestuften Mikrostrukturkörpers ist wenig anfällig gegen Fehler, und der Ausschußanteil bei den metallischen Formeinsätzen ist gering.
- Die beim Abformen des Formteils vorhandenen senkrechten Wandflächen des metallischen Formeinsatzes sind aus tiefenlithographisch erzeugten Flächen hervorgegangen; ihre Rauhtiefe ist äußerst gering und wesentlich geringer als die durch mechanische Präzisionsbearbeitung und/oder Polieren erreichbare Rauhtiefe. Damit werden Verluste durch Lichtstreuung an den Wandflächen minimiert.
- In einem Bauelement können verschiedene und komplizierte Funktionen enthalten sein. Die Integrationsdichte kann recht groß werden, wobei die Kosten im günstigen Bereich liegen.
- Die Ankopplung der LWL-Fasern an das Formteil ist über lange Zeit sehr stabil.
- Das ausgehärtete Polymer auf der Stirnfläche der LWL-Fasern reduziert die Verluste durch Lichtreflexion am Übergang von LWL-Faser zur Lichtwellenleitungsstruktur im Vergleich zu dem Übergang von LWL-Faser in Luft.
- Die Abmessungen der Vorformen der Lichtwellenleitungsstrukturen im Formteil lassen sich im Mikrometerbereich mit sehr großer Präzision - im Submikrometerbereich - optimal wählen. - Die günstigen Eigenschaften vieler polymerer Werkstoffe lassen sich beim Abformen des Formteils besser ausnutzen als bei den bisher bekannten Verfahren.
- Der Zeitbedarf zur Herstellung des Formteils ist bei Anwendung von Spritzgußverfahren geringer als z. B. bei Verwendung UV-härtender Materialien.
- Der metallische Formeinsatz kann für viele Abformungen benutzt werden.

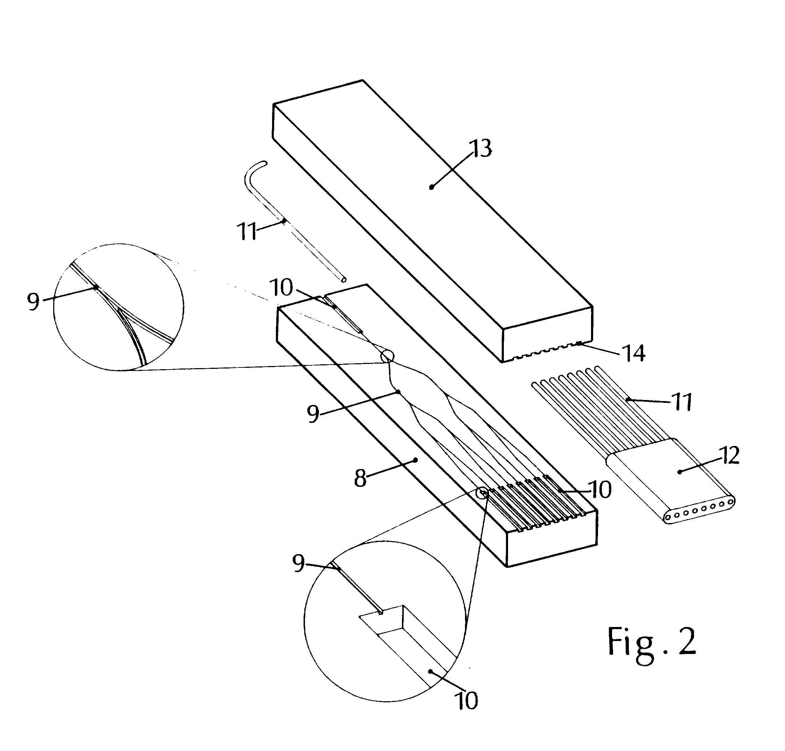

Die Erfindung wird an den Beispielen 1 bis 3 und Figuren 2 bis 4 weiter erläutert.

Beispiel 1 und Figur 2: 1 x 8-Koppler mit vergossenen Gräben als Lichtwellenleitungsstrukturen für Einmoden-LWL-Fasern

Mit einem durch Röntgen-Tiefenlithographie hergestellten Mikrostrukturkörper wird ein metallischer Formeinsatz durch Galvanoformung erzeugt, mit dem ein Formteil (8) in Polymethyl-methacrylat (PMMA, Brechungsindex 1,490) abgeformt wird. Das Formteil (8) enthält Gräben (9) in wiederholter Y-Form (9 µm breit; 7µm tief) als Vorformen für die Lichtwellenleitungsstrukturen sowie Gräben (10) (66 µm tief; 125 µm breit; 5 mm lang) als Faserführungsstrukturen für die anzukoppelnden LWL-Fasern (11).

In jeden der neun Gräben (10) als Faserführungsstrukturen wird eine ummantelte Quarz-LWL-Faser (Faserdurchmesser 125 µm; Kerndurchmesser 9 µm; Brechungsindex des Quarz-Kerns 1,49) eingelegt, deren planes Ende an der Stufe zwischen Graben (10) als Faserführungsstruktur und Graben (9) als Vorform für die Lichtwellenleitungsstruktur liegt. Zur vereinfachten Ankopplung kann ein Bändchenkabel (12) mit 8 Fasern im Raster von 250 µm verwendet werden. Die Gräben (9) als Vorformen für die Lichtwellenleitungsstrukturen werden nachbehandelt; die Gräben (9) und die Gräben (10) als Faserführungsstrukturen mit den eingelegten LWL-Fasern (11) werden mit einem Copolymer, bestehend aus deuteriertem PMMA-d8 und Tetrafluorpropyl-methacrylat (TFPMA) ausgegossen. Das Mischungsverhältnis ist so eingestellt, daß die Brechungsindex-Differenz zum Formteil (8) 0,005 beträgt.

Das Formteil wird sofort mit einer Platte (13) aus PMMA abgedeckt. Durch das aushärtende Copolymer wird die Platte (13) mit dem Formteil (8) verklebt, und die angekoppelten LWL-Fasern (11) werden mit dem Formteil dauerhaft verbunden.

Da die Oberseite der LWL-Fasern (11) aus der Oberseite des Formteils herausragt, hat die Deckplatte (13) an ihren Enden ebenfalls Gräben (14) als Faserführungsstrukturen für die LWL-Fasern (59 µm tief; 125 µm breit; 5 mm lang).

Der hergestellte 1 x 8-Koppler für Einmoden-LWL-Fasern hat bei 1300 nm Wellenlänge eine Dämpfung von 0,8 dB/cm.

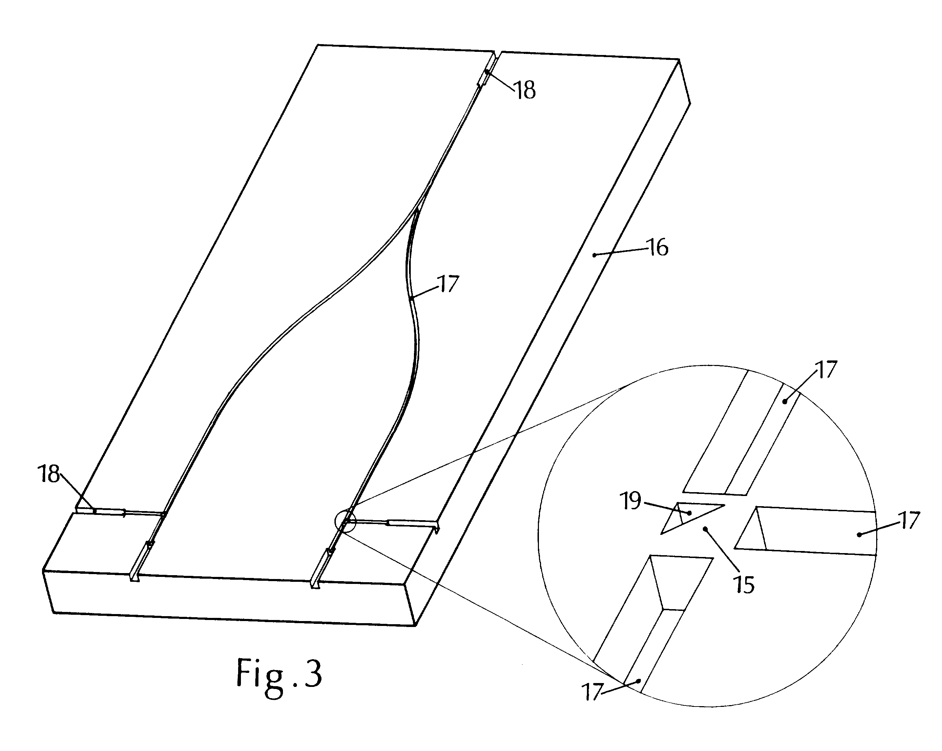

Beispiel 2 und Figur 3: 1 x 2-Koppler (Y-Koppler) mit Strahlteilerprisma und nachbehandelten Gräben als Lichtwellenleitungsstrukturen für Mehrmoden-LWL-Fasern

In diesem für optische Sensoranwendungen vorgesehenen Bauelement wird das von der Lichtquelle kommende Licht im Y auf zwei Äste aufgeteilt, durchläuft dann zunächst nur gering beeinflußt eine Prismenstruktur (15) und wird auf eine LWL-Meßfaser zur Experimentier-Vorrichtung gegeben. Der dort reflektierte Anteil wird am Prisma durch Totalreflexion auf eine weitere LWL-Faser gegeben, die mit einem Detektor verbunden ist.

Zur Herstellung wird analog zu Beispiel 1 ein Formteil (16) in PMMA abgeformt. Das Formteil enthält Gräben (17) in Y-Form (200 µm breit; 200 µm tief) als Vorformen für die Lichtwellenleitungsstrukturen sowie Gräben (18) als Faserführungsstrukturen (250 µm breit; 225 µm tief; 3 mm lang) für die anzukoppelnden LWL-Fasern.

In jeden der fünf Gräben (18) als Faserführungsstrukturen wird eine Mehrmoden-Stufenindex-LWL-Faser (Faserdurchmesser 250 µm; Kerndurchmesser 200 µm; Brechungsindex des Kerns 1,49; numerische Apertur 0,5) eingelegt, deren planes Ende an der Stufe zwischen Graben (18) als Faserführungsstruktur für die LWL-Faser und Graben (17) als Vorform für die Lichtwellenleitungsstruktur liegt. Die Gräben (17) als Vorformen für die Lichtwellenleitungsstrukturen werden nachbehandelt; die Gräben (17) und die Gräben (18) als Faserführungsstrukturen mit den eingelegten LWL-Fasern werden mit einem Epoxid-Harz (EPO-TEK 301-2, Brechungsindex 1,564) ausgegossen. Dabei bleibt die Öffnung (19) hinter dem Reflexionsprisma frei. Das Formteil wird sofort mit einer Platte aus PMMA abgedeckt. Durch das aushärtende Epoxid-Harz wird die Platte mit dem Formteil verklebt, und die angekoppelten LWL-Fasern werden mit dem Formteil dauerhaft verbunden.

Die Einfügedämpfung des etwa 3 cm langen Bauelementes beträgt (bei 633 nm Wellenlänge) an den beiden symmetrischen Meß-Ausgängen 9,1 dB und 9,4 dB, der Dämpfungsunterschied beträgt also nur 0,3 dB. Bei Annahme einer verlustlosen Reflexion am Ende der LWL-Meßfaser beträgt die Einfügedämpfung an den beiden Detektorausgängen 12,3 dB und 12,7 dB.

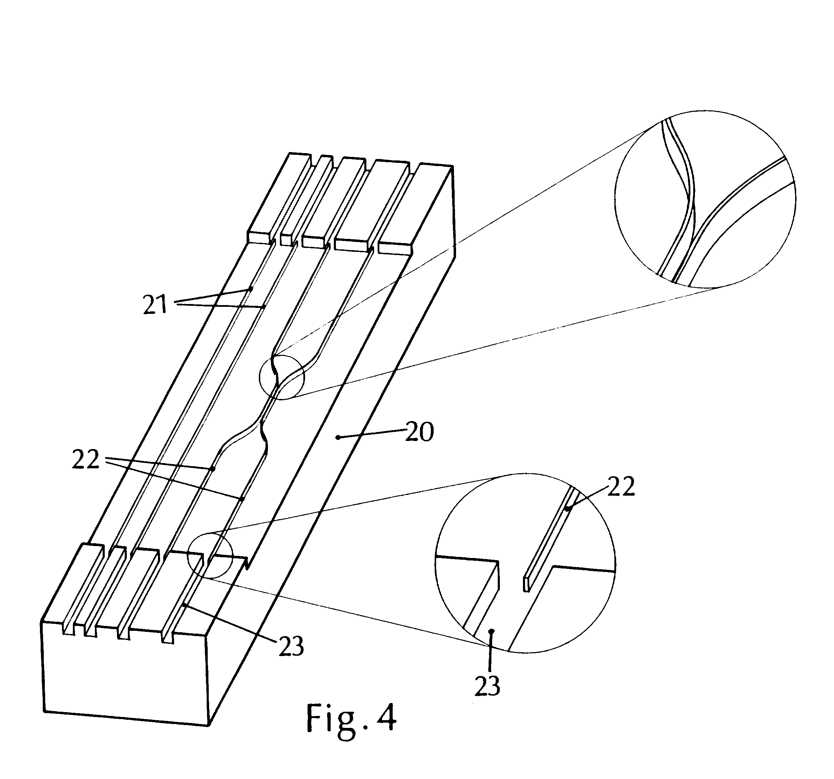

Beispiel 3 und Figur 4: 2 x 2-Richtkoppler mit nachbehandelten Stegen als Lichtwellenleitungsstrukturen für Einmoden-LWL-Fasern

Analog zu den vorhergehenden Beispielen wird ein Formteil (20) in PMMA abgeformt. Das Formteil enthält neben zwei unverzweigten Stegen (21) weitere Stege (22) in Richtkoppler-Anordnung (5 µm breit; 64 µm hoch) als Vorformen für die Lichtwellenleitungsstrukturen sowie Gräben (23) (125 µm breit; 120 µm hoch; 10 mm lang) als Faserführungsstrukturen für die anzukoppelnden LWL-Fasern.

Das Formteil wird im Bereich der Stege (21) und (22) nachbehandelt; es wird ganzflächig einem Ionenstrahl ausgesetzt, wodurch der Brechungsindex in den bestrahlten Bereichen in Oberflächennähe erhöht wird (SPIE Vol. 1014, Micro-Optics, 1988, Seiten 132-136).

In jeden der acht Gräben (23) als Faserführungsstrukturen wird eine Einmoden-LWL-Faser (Abmessungen wie in Beispiel 1) eingelegt, deren planes Ende an der Stufe zwischen Graben (23) als Faserführungsstruktur und nachbehandeltem Steg (21) bzw.(22) als Lichtwellenleitungsstruktur liegt. Das Formteil wird im Bereich um die Stege (21) und (22) und in den Gräben (23) zum Schutz der LWL-Fasern und der Lichtwellenleitungsstrukturen mit PMMA vergossen.

## Patentansprüche

1. Verfahren zum Herstellen passiver integriert-optischer Bauelemente mit folgenden Schritten :
- Herstellen eines Formteils aus Polymermaterial mit Stegen oder Gräben als Vorformen für Lichtwellenleitungsstrukturen mit rechteckigem Querschnitt, dessen Kantenlänge 1 bis 1000 Mikrometer beträgt und mit mindestens einer Faserführungsstruktur, die sich in Verlängerung der Vorform enstreckt, wobei
- jeder Übergang zwischen einer Faserführungsstruktur und der Vorform für die Lichtwellenleitungsstruktur mit einer Stufe versehen wird,
- beide Strukturen gleichzeitig hergestellt werden, und
- die Vorformen für die Lichtwellenleitungsstrukturen zum Erreichen der Lichtwellenleitung nachbehandelt werden.

2. Verfahren nach Anspruch 1, bei dem das Formteil mit folgenden Schritten gefertigt wird:
- Herstellen eines gestuften Mikrostrukturkörpers durch Röntgen-Tiefenlithographie, dessen Struktur mit der Struktur des Formteils übereinstimmt,
- Herstellen eines gestuften metallischen Formeinsatzes aus dem gestuften Mikrostrukturkörper durch Galvanoformung, dessen Struktur zur Struktur des Formteils komplementär ist,
- Abformen eines Formteils aus Polymermaterial mittels des gestuften metallischen Formeinsatzes.

3. Verfahren nach den Ansprüchen 1 und 2, wobei das abgeformte Formteil weitere mikrooptische Elemente, wie Prismen, Zylinderlinsen, Zylinderspiegel oder Strichgitter, enthält.

4. Verfahren nach den Ansprüchen 1 bis 3, wobei die Lichtwellenleitungsstrukturen als Gräben ausgebildet werden, und die Gräben vollständig oder stellenweise mit einem Polymer ausgefüllt werden, dessen Brechungsindex größer ist als der Brechungsindex des Polymeren, aus dem das Formteil besteht.

5. Verfahren nach den Ansprüchen 1 bis 3, wobei die Lichtwellenleitungsstrukturen als Stege ausgebildet werden, und der Brechungsindex der Stege mittels Ionenimplantation gegenüber dem Brechungsindex des Polymeren, aus dem das Formteil besteht, erhöht wird.

6. Verfahren nach den Ansprüchen 1 bis 5, wobei eine Deckplatte aus einem Material, dessen Brechungsindex kleiner als der Brechungsindex der Lichtwellenleitungsstruktur ist, als oberer Abschluß des Formteils aufgebracht wird.

7. Verfahren nach den Ansprüchen 1 bis 6, mit folgenden weiteren Schritten :
- Ankoppeln mindestens einer Lichtwellenleiter-Faser an die integriert-optische Lichtwellenleitungsstruktur durch Einlegen mindestens einer Lichtwellenleiter-Faser in mindestens eine Faserführungsstruktur, wobei sich die Deckplatte über die Faserführungsstruktur erstreckt und die mindestens eine Lichtwellenleiter-Faser in die mindestens eine Faserführungsstruktur preßt.

8. Verfahren nach den Ansprüchen 1 bis 7, mit folgenden weiteren Schritten :
- Ankoppeln mindestens einer Lichtwellenleiter-Faser an die integriert-optische Lichtwellenleitungsstruktur durch Einlegen mindestens einer Lichtwellenleiter-Faser in mindestens eine Faserführungsstruktur, wobei die mindestens eine Lichtwellenleiter-Faser durch das Polymer, das in die als Gräben ausgebildeten Vorformen für die Lichtwellenleitungsstrukturen eingefüllt wird, in ihrer Lage fixiert wird.

9. Passives integriert-optisches Baulelement mit
- einem Formteil (8),(20) aus Polymermaterial mit Lichtwellenleitungsstrukturen die in Gräben oder als Stege ausgebildet sind gekennzeichnet durch
- einen Brechungsindex der Lichtwellenleitungsstrukturen, der 0,002 bis 0,05 größer ist als der Brechungsindex des umgebenden Polymermaterials
- einen rechteckigen Querschnitt der Lichtwellenleitungsstrukturen, dessen Kantenlänge 1 bis 1000 Mikrometer beträgt,
- Faserführungsstrukturen (10),(23) für Lichtwellenleiterfasern (11) mit einem Durchmesser von 30 bis 1000 Mikrometern,
- eine Stufe in mindestens einer der beiden Richtungen senkrecht zur Achse der Faserführungsstrukturen an jedem Übergang zwischen einer Faserführungsstruktur und einer Lichtwellenleitungsstruktur, sowie
- mindestens eine an die Lichtwellenleitungsstruktur angekoppelte Lichtwellenleiter-Faser (11), deren Ende in einer Faserführungsstruktur (10),(23) liegt.

10. Passives integriert-optisches Baulelement aus polymeren Werkstoffen nach Anspruch 9, wobei
der Verlauf der Lichtwellenleitungsstrukturen gerade oder gekrümmt ist.

11. Passives integriert-optisches Bauelement aus polymeren Werkstoffen nach den Ansprüchen 9 und 10, wobei
die Breite der Lichtwellenleitungsstrukturen sich innerhalb des Baulelementes in Richtung der Oberfläche des Formteils verändert.

12. Passives integriert-optisches Bauelement aus polymeren Werkstoffen nach den Ansprüchen 9 bis 11, mit
mikrooptischen Elementen wie Prismen, Zylinderlinsen, Zylinderspiegel oder Strichgitter.

13. Passives integriert-optisches Bauelement aus polymeren Werkstoffen nach den Ansprüchen 9 bis 12, wobei
die Lichtwellenleitungsstrukturen einen 1 x n-Koppler (Verzweiger) bilden, wobei n = 2 bis n = 100, vorzugsweise n = 2 bis n = 32, ist.

14. Passives integriert-optisches Bauelement aus polymeren Werkstoffen nach den Ansprüchen 9 bis 12, wobei
die Lichtwellenleitungsstrukturen einen n x m-Sternkoppler bilden, mit n und m von 1 bis 100, vorzugsweise 1 bis 32, wobei n und m gleich groß oder unterschiedlich sind.

15. Passives Integriert-optisches Bauelement aus polymeren Werkstoffen nach den Ansprüchen 9 bis 12, wobei
die Lichtwellenleitungsstrukturen einen symmetrischen oder asymmetrischen T-Koppler oder Y-Koppler bilden.

16. Passives integriert-optisches Bauelement aus polymeren Werkstoffen nach den Ansprüchen 9 bis 12, wobei
die Lichtwellenleitungsstrukturen einen Wellenlängen-Demultiplexer in Richtkopplerstruktur bilden.

17. Passives integriert-optisches Bauelement zum Ankoppeln von Lichtwellenleiter-Fasern (5; 11), die funktionell mit mindestens einer in dem Bauelement vorhandenen Lichtwellenleitungsstruktur (9; 17; 21, 22) ausgerichtet sind, mit
einem Formteil (2; 8; 16; 20) aus Polymermaterial,
gekennzeichnet durch
eine Deckplatte (7; 13) aus Polymermaterial,
wobei das Formteil (2; 8; 16; 20) mindestens eine Faserführungsgsstruktur (3; 10; 14; 18; 23) zum Aufnehmen und Festhalten jeweils einer Lichtwellenleiter-Faser aufweist, und
wobei das Formteil (2; 8; 16; 20) mindestens eine Lichtwellenleitungsstruktur (9; 17; 21, 22) aufweist, die derart von der mindestens einen Faserführungsgsstruktur mit einer gestuften Struktur abgesetzt ist, daß bei der Aufnahme einer Lichtwellenleiter-Faser in einer Faserführungsgsstruktur die Lichtwellenleiter-Faser funktionell mit einem entsprechenden Ende der Lichtwellenleitungsstruktur ausgerichtet ist, um Licht durch die Lichtwellenleiter-Faser und die Lichtwellenleitungsstruktur durchzulassen.

18. Bauelement nach Anspruch 17, wobei der Brechungsindex der Lichtwellenleitungsstruktur 0,002 bis 0,05 größer ist als der Brechungsindex des umgebenden Polymermaterials, die Lichtwellenleitungsstruktur einen rechteckigen Querschnitt aufweist, dessen Kantenlänge 1-1000 µm beträgt und die Faserführungsgsstruktur einen Durchmesser von 30-1000 µm aufweist.

## Claims

1. A method of producing passive integrated optical devices comprising the following steps:
- producing a polymeric molded piece with webs or grooves as preforms for light waveguide structures having a rectangular cross section, the length of the edges of the rectangles being 1 to 1000 µm, and with one or more fiber guidance structures extending as extension of the preform, wherein
- each transition between a fiber guidance structure and the preform for the light waveguide structure is provided with a step,
- both structures are produced simultaneously, and
- the preforms for the light waveguide structures are aftertreated for attaining the ligthwave conduction.

2. The method according to claim 1, wherein the molded piece is produced by the following steps:
- producing a stepped microstructure body by X-ray deep lithography whose structure corresponds to the structure of the molded piece,
- producing a stepped metallic mold insert from the stepped microstructure body by electroforming whose structure is complementary to the structure of the molded piece,
- shaping a polymeric molded piece by means of the stepped metallic mold insert.

3. The method according to claims 1 and 2, wherein the shaped molded piece contains further microoptical elements such as prisms, cylinder lenses, cylinder mirrors or ruled gratings.

4. The method according to claims 1 to 3, wherein the light waveguide structures are formed as grooves and the grooves are completely or partly filled with a polymer whose index of refraction is greater than the index of refraction of the polymer the molded piece is made of.

5. The method according to claims 1 to 3, wherein the light waveguide structures are formed as webs and the index of refraction of the webs is increased by ion implantation compared to the index of refraction of the polymers the molded piece is made of.

6. The method according to claims 1 to 5, wherein a cover plate of a material whose index of refraction is smaller than the index of refraction of the light waveguide structure is applied on the top of the molded piece.

7. The method according to claims 1 to 6, comprising the following further steps:
- securing at least one optical fiber to the integrated optical light waveguide structure by inserting at least one optical fiber into at least one fiber guidance structure, wherein the cover plate extends across the fiber guidance structure and presses the at least one optical fiber into the at least one fiber guidance structure.

8. The method according to claims 1 to 7, comprising the following further steps:
- securing at least one optical fiber to the integrated optical light waveguide structure by inserting at least one optical fiber into at least one fiber guidance structure, wherein the at least one optical fiber is fixed in its position by the polymer which is filled into the preforms for the light waveguide structures which are formed as grooves.

9. A passive integrated optical device comprising
- a molded piece (8), (20) made of polymeric material having light waveguide structures which are formed in grooves or as webs, characterized by
- an index of refraction of the light waveguide structures which is 0.002 to 0.05 greater than the index of refraction of the surrounding polymeric material,
- a rectangular cross-section of the light waveguide structures, the length of the edges of the rectangles being 1 to 1000 µm,
- fiber guidance structures (10), (23) for optical fibers (11) having a diameter of 30 to 1000 µm,
- a step in at least one of the two directions perpendicularly to the axis of the fiber guidance structures at each transition between a fiber guidance structure and a light waveguide structure, and
- at least one optical fiber (11) secured to the light waveguide structure, the end of said optical fiber being located in a fiber guidance structure (10), (23).

10. A passive integrated optical device made of polymeric material according to claim 9, wherein the shape of the light waveguide structures is straight or bent.

11. A passive integrated optical device made of polymeric material according to claims 9 and 10, wherein the width of the light waveguide structures varies within the device in the direction of the surface of the molded piece.

12. A passive integrated optical device made of polymeric material according to claims 9 to 11, comprising microoptical elements such as prisms, cylinder lenses, cylinder mirrors or ruled gratings.

13. A passive integrated optical device made of polymeric material according to claims 9 to 12, wherein the light waveguide structures form an 1 x n-coupler (divider), wherein n = 2 to n = 100, preferably n = 2 to n = 32.

14. A passive integrated optical device made of polymeric material according to claims 9 to 12, wherein the light waveguide structures form an n x m star coupler, n and m ranging from 1 to 100, preferably 1 to 32, wherein n and m are equal or different.

15. A passive integrated optical device made of polymeric material according to claims 9 to 12, wherein the light waveguide structures form a symmetric or asymmetric T-coupler or Y-coupler.

16. A passive integrated optical device made of polymeric material according to claims 9 to 12, wherein the light waveguide structures form a wavelength demultiplexer having a directional coupler structure.

17. A passive integrated optical device for securing optical fibers (5; 11) that are functionally aligned with at least one light waveguide structure (9; 17; 21; 22) contained within said device, said device comprising a polymeric molded piece (2; 8; 16; 20), characterized by
a polymeric cover plate (7; 13)
wherein
said molded piece (2; 8; 16; 20) comprises at least one fiber guidance structure (3; 10; 14; 18; 23) to receive and positionally secure an optical fiber inserted therein,
said molded piece (2; 8; 16; 20) comprises at least one light waveguide structure (9; 17; 21; 22) which is offset relative to said at least one fiber guidance structure by a step structure such that, upon receipt of an optical fiber in a fiber guidance structure, said optical fiber is functionally aligned with the corresponding end of said light waveguide structure so as to permit transmission of light through said optical fiber and said light waveguide structure.

18. The device according to claim 17, wherein the index of refraction of the light waveguide structure is 0.002 to 0.05 greater than the index of refraction of the surrounding polymeric material, the light waveguide structure has a rectangular cross-section, the length of the edges of the rectangles being 1-1000 µm, and the fiber guidance structure has a diameter of 30-1000 µm.

## Revendications

1. Procédé de fabrication de composants passifs à optique intégrée comprenant les étapes suivantes :
- fabrication d'une partie de moule en matériau polymère avec des nervures ou des rigoles comme préformage pour des structures de guidage d'ondes lumineuses avec une section rectangulaire, dont la longueur d'arête va de 1 à 1000 microns, et avec au moins une structure de guidage de fibre, qui s'étend dans l'allongement de la préforme,
- chaque transition entre une structure de guidage de fibre et la préforme pour la structure de guidage d'ondes lumineuses étant pourvue d'un étage,
- les deux structures étant fabriquées en même temps, et
- les préformes pour les structures de guidage d'ondes lumineuses étant traitées ultérieurement pour obtenir le guidage d'ondes lumineuses.

2. Procédé selon la revendication 1, avec lequel la partie de moule est fabriquée avec les étapes suivantes :
- fabrication d'un corps étagé de microstructure par lithographie en profondeur aux rayons X, dont la structure coïncide avec la structure de la partie de moule,
- fabrication d'une pièce d'insertion de moule métallique étagé à partir du corps étagé de microstructure par électroformage, dont la structure est complémentaire de la structure de la partie de moule,
- moulage d'une partie de moule en matériau polymère au moyen de la pièce d'insertion métallique.

3. Procédé selon les revendications 1 et 2, la partie de moule moulée contenant d'autres éléments de micro-optique tels que prismes, lentilles cylindriques, miroirs cylindriques ou treillis à traits.

4. Procédé selon les revendications 1 à 3, les structures de guidage d'ondes lumineuses étant conçues comme des rigoles et les rigoles étant remplies complètement ou par endroits d'un polymère, dont l'indice de réfraction est supérieur à l'indice de réfraction du polymère dans lequel est formée la partie de moule.

5. Procédé selon les revendications 1 à 3, les structures de guidage d'ondes lumineuses étant conçues comme des nervures, et l'indice de réfraction des nervures étant augmenté au moyen d'implantation ionique par rapport à l'indice de réfraction du polymère dans lequel est formée la pièce moulée.

6. Procédé selon les revendications 1 à 5, une plaque de recouvrement à base d'un matériau, dont l'indice de réfraction est inférieur à l'indice de réfraction de la structure de guide d'ondes lumineuses, étant appliquée comme fermeture supérieure de la partie de moule.

7. Procédé selon les revendications 1 à 6, avec les autres étapes suivantes :
- raccordement d'au moins une fibre guide d'ondes lumineuses à la structure de guidage d'ondes lumineuses à optique intégrée par insertion d'au moins une fibre guide d'ondes lumineuses dans au moins une structure de guidage de fibre, la plaque de recouvrement s'étendant sur la structure de guidage de fibre et la au moins une fibre guide d'ondes lumineuses pressant dans la au moins une structure de guidage de fibre.

8. Procédé selon les revendications 1 à 7, avec les autres étapes suivantes :
- raccordement d'au moins une fibre guide d'ondes lumineuses à la structure de guidage d'ondes lumineuses à optique intégrée par insertion d'au moins une fibre guide d'ondes lumineuses dans au moins une structure de guidage de fibre, la au moins une fibre guide d'ondes lumineuses étant fixée dans sa position par le polymère qui est versé dans les préformes conçues comme des rigoles pour les structures de guidage d'ondes lumineuses.

9. Composant passif à optique intégré avec
- une partie de moule (8),(20) en matériau polymère avec des structures de guidage d'ondes lumineuses, qui sont conçues dans des rigoles ou comme des nervures, caractérisé par
- un indice de réfraction des structures de guidage d'ondes lumineuses qui est de 0,002 à 0,05 supérieur à l'indice de réfraction du matériau polymère enveloppant,
- une section rectangulaire des structures de guidage d'ondes lumineuses, dont la longueur d'arête est de 1 à 1000 microns,
- des structures de guidage de fibre (10),(23) pour des fibres guides d'ondes lumineuses (11) avec un diamètre de 30 à 1000 microns,
- un étage dans au moins l'une des deux directions perpendiculairement à l'axe des structures de guidage de fibre sur chaque transition entre une structure de guidage de fibre et une structure de guidage d'ondes lumineuses ainsi que
- au moins une fibre guide d'ondes lumineuses (11) raccordée à la structure de guidage d'ondes lumineuses et dont l'extrémité repose dans une structure de guidage de fibre (10),(23).

10. Composant passif à optique intégrée à base de matériaux polymères selon la revendication 9, le tracé des structures de guidage d'ondes lumineuses étant droit ou courbe.

11. Composant passif à optique intégrée à base de matériaux polymères selon les revendications 9 et 10, la largeur des structures de guidage d'ondes lumineuses se modifiant à l'intérieur de l'élément dans le sens de la surface de la partie de moule.

12. Composant passif à optique intégrée à base de matériaux polymères selon les revendications 9 à 11 avec des éléments de micro-optique tels que prismes, lentilles cylindriques, miroirs cylindriques ou treillis à traits.

13. Composant passif à optique intégrée à base de matériaux polymères selon les revendications 9 à 12, les structures de guidage d'ondes lumineuses formant un coupleur 1 x n (répartiteur), n = 2 à n = 100, de préférence n = 2 à n = 32.

14. Composant passif à optique intégrée à base de matériaux polymères selon les revendications 9 à 12, les structures de guidage d'ondes lumineuses formant un coupleur en étoile n x m, avec n et m allant de 1 à 100, de préférence 1 à 32, n et m étant de même grandeur ou différents.

15. Composant passif à optique intégrée à base de matériaux polymères selon les revendications 9 à 12, les structures de guidage d'ondes lumineuses formant un coupleur en T ou en Y symétrique ou asymétrique.

16. Composant passif à optique intégrée à base de matériaux polymères selon les revendications 9 à 12, les structures de guidage de lumière formant un démultiplexeur de longueur d'onde dans la structure de coupleur directif.

17. Composant passif à optique intégré pour le raccordement de fibres conductrices d'ondes lumineuses (5 ; 11), qui sont alignées fonctionnellement avec au moins une structure conductrice d'ondes lumineuses (9; 17; 21, 22) prévue dans ledit composant, avec une partie de moule (2; 8; 16; 20) en matière polymère,
caractérisé par
une plaque de couvercle (7; 13) de matière polymère, la partie de moule (2; 8; 16; 20) présentant au moins une structure de guidage de fibre (3; 10; 14; 18; 23) pour recevoir et fixer chacune des fibres conductrices d'ondes lumineuses,
la partie de moule (2; 8; 16; 20) présentant au moins une structure conductrice d'ondes lumineuses (9; 17; 21, 22) qui est décalée de la au moins une structure de guidage de fibre avec une structure étagée de telle sorte que lors de la réception d'une fibre conductrice d'ondes lumineuses dans une structure de guidage de fibre, la fibre conductrice d'ondes lumineuses soit alignée fonctionnellement avec une extrémité correspondante de la structure conductrice d'ondes lumineuses, pour laisser passer la lumière à travers la fibre conductrice d'ondes lumineuses et la structure conductrice d'ondes lumineuses.

18. Composant selon la revendication 17, dans lequel l'indice de réfraction de la structure conductrice d'ondes lumineuses est de 0,002 à 0,05 fois plus élevé que l'indice de réfraction de la matière polymère enveloppante, la structure conductrice d'ondes lumineuses présentant une section rectangulaire dont la longueur des côtés est comprise entre 1 et 1000 µm et la structure de guidage de fibre présente un diamètre de 30 à 1000 µm.
